(19) Europäisches Patentamt
European Patent Office
Office européen des brevets

(11) EP 2 821 953 A1

(12) EUROPEAN PATENT APPLICATION

(43) Date of publication:
07.01.2015 Bulletin 2015/02

(51) Int Cl.:
*G06Q 30/02* (2012.01)

(21) Application number: 14175123.0

(22) Date of filing: 01.07.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 01.07.2013 US 201361841893 P

(71) Applicants:
• Konchitchki, Yaniv
  Kensington, CA 94707 (US)
• Patatoukas, Panos N.
  Kensington, CA 94707 (US)

(72) Inventor: Patatoukas, Panos N.
Kensington, CA US-94707 (US)

(74) Representative: Lampis, Marco et al
Dragotti & Associati Srl
Via Nino Bixio, 7
20129 Milano (IT)

(54) Methods and systems for forecasting economic movements

(57) Some embodiments include a computer-implemented method of predicting economical movements. The method can include: receiving financial statements of a group of firms within a geographical region; extracting accounting measurements from the financial statements; computing a macroeconomic index by aggregating at least a computed financial assessment overtime based on the accounting measurements across the group within the geographical region; and forecasting a macroeconomic activity within the geographical region based on the macroeconomic index.

FIG. 1

**Description**

**CROSS-REFERENCE TO RELATED APPLICATION(S)**

This application claims the priority of U.S. Provisional Patent Application No. 61/841,893, filed on July 01, 2013, which is incorporated by reference herein in its entirety.

This application claims the priority of U.S. Patent Application No. 14/318,315, filed on June 27, 2014, which is incorporated by reference herein in its entirety.

**RELATED FIELD**

This disclosure relates generally to predictive economic modeling, and in particular, to a computer-implemented method of predicting an economical movement.

**BACKGROUND**

Macroeconomics is a branch of economics dealing with the performance, structure, behavior, and decision-making of an economy as a whole, rather than individual markets. This includes national, regional, and global economies. An exemplary measurement of macroeconomic performance is the real gross domestic product (GDP) growth. GDP is the market value of all official recognized final goods and services produced within a country in a year, or over a given period of time. A GDP measurement that is not inflation-adjusted is referred to as "nominal GDP." The "real GDP" growth is a measurement of the growth of GDP in *real* term, i.e., inflation-adjusted terms, to eliminate the distorting effect of inflation on the price of goods produced. The conventional method of predicting and forecasting GDP growth includes using stock market returns. However, the conventional method is prone to errors and, hence, there is a need to find a financial model to account for those errors.

**DISCLOSURE OVERVIEW**

Disclosed is a computer-implemented economic trend prediction system (e.g., a computer system) enabled by an accounting-based, quantitative analysis process. Financial statement analysis has traditionally been used in microeconomics to analyze individual firm profitability for forecasting business prospect of a firm. In various embodiments, the computer-implemented prediction system aggregates accounting information (e.g., accounting measurements or financial assessments) from the financial statements of a region group of firms to forecast macroeconomic activities beyond that of an individual firm. The accounting measurements refer to numeric entries in a financial statement and the financial assessment is a value derived from one or more of the accounting measurements. In some embodiments, other information (e.g., stock return data, contemporaneous GDP growth rate, survey data from forecasters) in addition to the accounting information is used to forecast the macroeconomic activities. In some embodiments, the computer-implemented prediction system aggregates the accounting information according to a financial model that places weights on the different accounting information. In other embodiments, the aggregation occurs without any weights. In some embodiments, the computer-implemented prediction system normalizes the accounting information either before or after the aggregating occurs. In other embodiments, the computer-implemented prediction system does not normalize.

The method includes aggregating accounting information (e.g., over one or more accounting reports), including firm profitability and/or profitability drivers through a computer system to compute timely insights that are relevant for forecasting economic activities and trends, including real GDP growth, nominal GDP growth, one or more components of nominal and real GDP growth, nominal and real levels of GDP and/or its components, various inflation indexes (e.g., consumer price index (CPI), producer price index (PPI), GDP deflator (i.e., measure of the level of prices of all new, domestically produced, final goods and services in an economy)), recessions and expansions, economic turning points, revisions in macroeconomic constructs, unemployment rates, industrial product, housing starts, real estate valuations, etc. GDP growth, featured in the National Income and Product Accounts (NIPA) prepared by the Bureau of Economic Analysis (BEA), measures the inflation-adjusted value added at each stage of the production process of goods and services produced in the US economy (BEA 2007). Depending on the geographical location of the accounting information, the disclosed computer system can forecast the economic activity of the U.S., parts of the U.S., or other regions worldwide.

A computer-implemented process collects financial statements of a group of firms in a region (e.g., geographical region) to identify accounting measurements and/or compute financial assessments (e.g., profitability or profitability drivers) for each of the firms within a time period represented by the financial statements. The group may be selected based on the size of the companies, such as the top one hundred firms. The selected group may be used as a basis to extract information embedded in accounting data of the entire stock market portfolio. In various embodiments, these accounting measurements and/or the financial assessments are aggregated into an index to forecast the economic activities for the region represented by the selected group.

In some embodiments, the disclosed computer system aggregates and summarizes bottom-line accounting earnings information into a single index. This index can provide real-time indications regarding the economy within a region (e.g., the U.S.), as reflected from aggregating the accounting measurements or financial assessments computed from the accounting measurements. The index can be updated every day, every week, every month, every quarter, or other time periods to provide accurate indication or forecast of macroeconomic state of the region.

The disclosed index provides an accounting-based signal of the macroeconomy and the valuation of capital market securities (e.g., stocks, bonds) in that macroeconomy. The information provided by the disclosed index can benefit a wide array of key decision making, including hedge activities, stock/bond/real-estate investments, firm inventory management, analyst forecasts, mortgage and refinancing decisions, hiring decisions, better identification of economic turning points, estimate decisions required from firm managers and auditors for financial reporting (e.g., quarterly and annual amounts of the Allowance for Uncollectible Accounts that is part of firms' Account Receivables), and overall macroeconomic forecasting.

In some embodiments, the disclosed system establishes one or more computer feeds (e.g., a real-time feed or an asynchronous feed) to receive updates on stock market returns, firms' financial statements (e.g., accounting reports or other reports containing financial or accounting data), or both. In some embodiments, the disclosed system uses a network channel to crawl (e.g., via webpage or database scraping) public financial databases to receive the accounting information and the stock market returns.

In at least one embodiment, the disclosed system computes profitability and/or profitability driver assessments based on the extracted information from the financial statements and aggregates the changes to the profitability driver assessments to compute a macroeconomic index. In some embodiments, the disclosed system first computes a macroeconomic index based on the stock market returns information of previous consecutive time periods, and then adjusts the macroeconomic index based on the aggregated changes of the profitability driver assessments. In some embodiments, the disclosed system adjusts the measurement window size (e.g., time length) of stock market returns to optimize the predictive accuracy. In some embodiments, a constant measurement window may be selected, such as an annual window. The prediction system can determine an association between the stock market returns and the portion of subsequent nominal or real GDP growth that is predictable based on the aggregation of accounting profitability drivers. The prediction system can compile the projected GDP growth in a macro-forecaster stock valuation interface illustrating the determined association in order to gauge the prospects of the financial movements of the economy. In embodiments, the disclosed system can estimate stock market returns via an aggregate index of profitability and/or profitability drivers. Because the aggregate index of changes in profitability and/or profitability drivers can predict subsequent GDP growth and because GDP growth is associated with stock market returns, the aggregate index can be used to provide relevant information regarding stock market valuation.

The accounting profitability and/or profitability driver assessments may be based on aggregate changes in earnings (including earnings scaled by any scaling variable such as total assets, market value of equity, or total/net sales) or in return on net operating assets (RNOA). For example, the macroeconomic index is calculated based on changes in the RNOA and its drivers rather than their levels because the objective is to forecast growth in economic activity rather than the level of economic activity. Compared to other accounting rates of return, such as return on equity or return on assets, the RNOA offers a more appealing means for gauging economic activity at the aggregate level. This is because the RNOA is based on a unlevered financial statements and offers a measure of economic activity at the enterprise level that lies at the center of value creation for equity and debt capital providers, paralleling GDP as a measure of value added at the aggregate level.

The disclosed system advantageously utilizes unique discoveries including: use of aggregate accounting information to predict macroeconomic activities, trends, and stock valuations, use of aggregate profitability driver assessments to extract forward-looking information about real GDP growth, use of the aggregate profitability driver assessments to incrementally improve macroeconomic forecasts based on stock market returns, other heuristics, or manual macroeconomic forecasts, and use of aggregate profitability driver assessments to predict stock valuation. The disclosed prediction system improves over traditional models used by macroeconomic forecasters, such as those who traditionally miss the predictive content of the profitability drivers. The disclosed prediction system can be used to correct forecast errors of existing macroeconomic models. Evidence shows that real and nominal GDP growth forecast errors are predictable based on changes in aggregate earnings scaled by sales, operating margins (OM) and depreciation-to-sales ratio (DEP). For example, a one standard deviation increase in the change of operating margin is associated with a 0.39 percentage point increase in subsequent real GDP growth forecast error, while a one standard deviation increase in the change of depreciation-to-sales ratio is associated with a 0.47 percentage point increase in subsequent real GDP growth forecast error. Taken together, aggregate changes in profitability drivers explain 8% of the time series variation in one quarter ahead real GDP growth forecast errors.

Some embodiments of the disclosure have other aspects, elements, features, and steps in addition to or in place of what is described above. These potential additions and replacements are described throughout the rest of the specification

## BRIEF DESCRIPTION OF THE DRAWINGS

**FIG. 1** is a block diagram illustrating an example system environment of a computer system for forecasting economic activity, in accordance with various embodiments.

**FIG. 2** is a block diagram of the computer system for forecasting economic activity, in accordance of various embodiments.

**FIG. 3** is a diagram representing a machine in the example form of a computer system within which a set of instructions, for causing the machine to perform any one or more of the methodologies or modules discussed herein, may be executed.

**FIG. 4** is a flow chart of an example of a computer-implemented method of operating a computer system to forecast a regional economic activity via regional financial statements, in accordance with various embodiments.

The figures depict various embodiments of the present disclosure for purposes of illustration only. One skilled in the art will readily recognize from the following discussion that alternative embodiments of the structures and methods illustrated herein may be employed without departing from the principles of the disclosure described herein.

## DETAILED DESCRIPTION

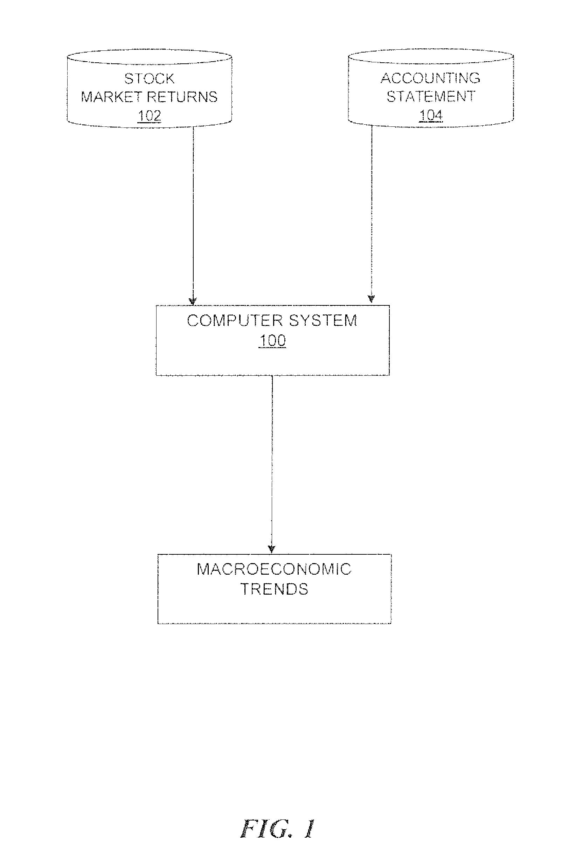

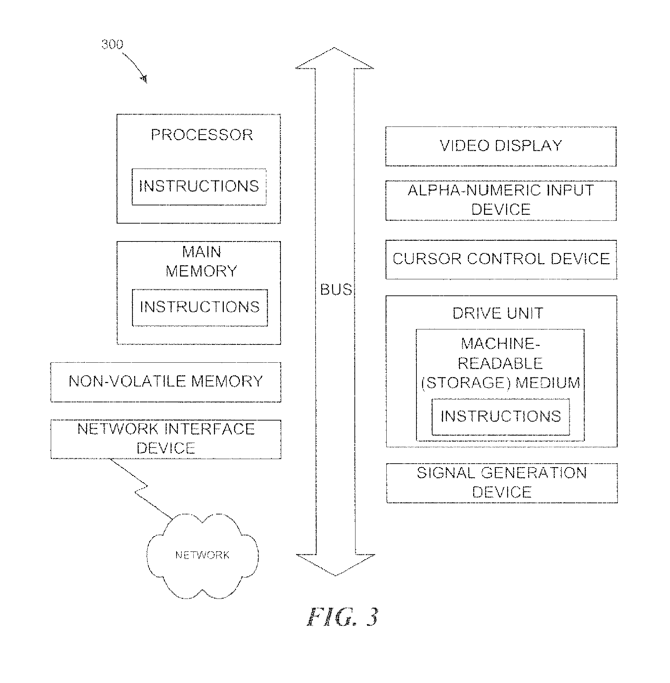

**FIG. 1** is a block diagram of an example system environment of a computer system 100 for forecasting an economic activity, in accordance with various embodiments. The computer system 100 may be the computer system 300 of FIG. 3. The computer system 100 is for forecasting nominal and/or real economic activity based on aggregate accounting assessments (e.g., profitability, profitability drivers, earnings growth) and other accounting data based on financial statements of a group of firms that is representative of a macroeconomy (e.g., a geographical region).

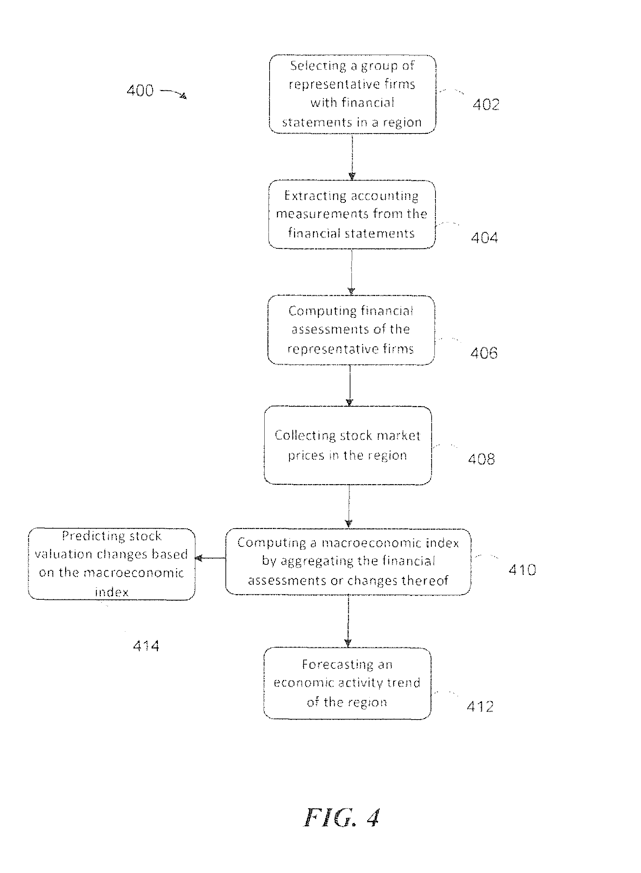

The computer system 100 may forecast real GDP growth based on accounting statements 104. The computer system 100 may also forecast an economic activity or trend (e.g., real GDP growth) based on an analysis of stock market returns 102. In some embodiments, to correct errors in forecasting the real GDP growth utilizing the stock market returns 102, the computer system 100 uses an aggregate index of changes in profitability drivers computed based on accounting measurements of the accounting statements 104 to adjust the forecasted real GDP growth. In some embodiments, the computer system 100 is also used to forecast stock valuation and stock return changes through an analysis of the accounting statements 104. Details of how the accounting statements 104 are utilized are further explained in **FIG. 4.**

The computer system 100 brings financial statement analysis of firm profitability drivers to the forefront as an incrementally useful tool for macro forecasting. It has been discovered that aggregate accounting profitability drivers in an economic region embed timely information about the prospects of the real and nominal economy movements within that region. Thus, the computer system 100 enables improvements in macro forecasting using accounting profitability data from a collection of accounting statements or data from individual firms in the region.

It has also been discovered that sampling the accounting profitability data from the top market capitalized firms enables accurate prediction of economic movement in the region without having to analyze each individual firm in the region in question. The region in question can be on a local level, on a national level, or on an international level.

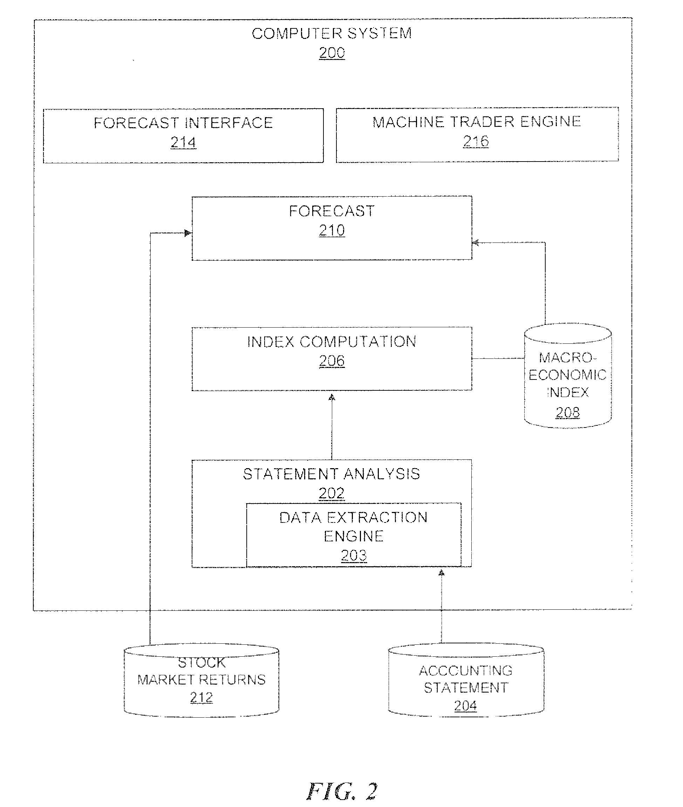

**FIG. 2** is a block diagram of a computer system 200 for forecasting economic activity, in accordance with various embodiments. The computer system 200 may be the computer system 100 of **FIG. 1.** The blocks/components/modules described within may be implemented as hardware modules, software modules, or any combination thereof. For example, the modules described can be software modules implemented as instructions on for creating a tangible storage memory capable of being executed by a processor or a controller on a machine. The tangible storage memory may be non-transitory. Software modules may be operable when executed by a processor or other computing device, such as a network capable computing device, a virtual machine terminal device, a cloud-based computing terminal device, or any combination thereof. The modules may be implemented as hardware modules, such as a single board chip, an application specific integrated circuit (ASIC), a field programmable gate array (FPGA) or a combination thereof.

Each of the modules may operate individually and independently of other modules. Some or all of the modules may be executed on the same host device or on separate devices. The separate devices can be coupled via a communication module to coordinate its operations. Some or all of the modules may be combined as one module.

A single module may also be divided into sub-modules, each sub-module performing separate method steps or method steps of the single module. In some embodiments, the modules can share access to a memory space. One module may access data already accessed by or transformed by another module. The modules may be considered "coupled" to one another if they share a physical connection or a virtual connection, directly or indirectly, allowing data accessed or modified from one module to be accessed in another module. In some embodiments, some or all of the modules can be upgraded or modified remotely. The computer system 200 may include additional, fewer, or different modules for various applications.

The computer system 200 may include a statement analysis module 202. The statement analysis module 202 uses a data extraction engine 203 to extract accounting measurements of a regional set of firms from financial accounting statements. For example, financial accounting statements may include income statements, balance sheet data, other financial reporting, or any combination thereof. In one embodiment, the data extraction engine 203 may receive financial accounting statements from an accounting statement store 204. The accounting statement store 204 may be an external or an internal electronic storage coupled to the statement analysis module 202.

The computer system 200 may include an index computation module 206. The index computation module 206 is configured to compute financial assessments (e.g., the profitability driver assessments or profitability assessments) based on the accounting measurements. The index computation module 206 is also configured to aggregate the changes to the financial assessments into an aggregate index. The aggregate index, for example, can represent changes to profitability assessments or profitability driver assessments at an aggregate level for firms within the region. The regional set of firms may be every firm within the region, a sampling of firms within the region, top firms by market capitalization within the region, a sampling of the top firms, or any variation thereof. The aggregate index may be saved or stored in a macroeconomic index store 208.

The computer system 200 combines income statement and balance sheet data to calculate the aggregate index (e.g., computed with the index computation module 206). The aggregate index has predictive content to forecast economic activities or to estimate stock valuations. To this end, the computer system 200 includes a forecast module 210. Users of the forecast module 210 can be accounting standard setters, macroeconomics forecasters, stock valuation evaluators, macro economists, academics, regional currency/finance analysts, government analysts, or any combination thereof.

The forecast module 210 utilizes the aggregate index associated with a region in the macroeconomic index store 208 to predict an economic activity (e.g., real GDP growth and overall stock valuation changes ) within the region. In some embodiments, the forecast module 210 may utilize stock market returns 212 within a region to predict the economic activity within the region. The forecast module 210 can further utilize the aggregate index computed by the index computation module 206 to incrementally adjust the forecasted economic activity level (e.g., forecasted based on the stock market returns, Treasury yield rate, term spread of bond yield (e.g., the yield on the ten-year constant maturity Treasury bond minus the yield on the one-year constant maturity Treasury bill), contemporaneous GDP growth, and/or current-quarter survey of professional forecasters (SPF) consensus forecast of future GDP growth.

The forecast module 210 may be coupled to a forecast interface 214 that presents the aggregate index or a macroeconomic indicator based on the aggregate index to a user (e.g., an investor). The forecast interface 214 can update the aggregate index or the macroeconomic indicator in real-time (i.e., as new financial statements are received), periodically, or according to a dynamic or pre-set schedule.

The forecast module 210 may also be coupled to a machine trader engine 216 configured to initiate and/or execute electronic transactions using an electronic exchange. For example, the machine trader engine 216 can initiate or execute electronic transaction involving valuables, such as mutual fund, securities, currency, derivatives, treasury bond, commodities, stocks, virtual currency, etc. The machine trader engine 216 determines whether to buy or sell in these electronic transactions by matching the involved valuable with a macroeconomic region and using the aggregate index associated with the macroeconomic region to determine whether to buy or sell.

Referring now to **FIG. 3,** this is a diagram representing a machine in the example form of a computer system 300 within which a set of instructions for causing the machine to perform any one or more of the methodologies or modules discussed herein may be executed.

In the example of **FIG. 3,** the computer system 300 includes a processor, memory, non-volatile memory, and an interface device. Various common components (e.g., cache memory) are omitted for illustrative simplicity. The computer system 300 is intended to illustrate a hardware device on which any of the modules or components depicted in the example of **FIG. 1** or **FIG. 2** (and any other components described in this specification) can be implemented. The computer system 300 can be of any applicable known or convenient type. The components of the computer system 300 can be coupled together via a bus or through some other known or convenient device. The computer system **300** can implement and execute the computer-implemented method 400 of **FIG. 4.**

This disclosure contemplates the computer system 300 taking any suitable physical form. By way of example and not by way of limitation, computer system 300 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, or a combination of two or more of these. Where appropriate, computer system 300 may include one or more computer systems; be unitary or distributed; span multiple locations; span multiple machines; or reside in a cloud, which may include one or more cloud components in one or more networks. Where appropriate, one or more computer systems may perform without substantial spatial or temporal limitation one or more steps of one or more methods described or illustrated herein. By way of example and not by way of limitation, one or more computer systems may perform in real time or in batch mode one or more steps of one or more methods described or illustrated herein. When appropriate, one or more computer systems may perform at different times or at different locations one or more steps of one or more methods described or illustrated herein.

The processor may be, for example, a conventional microprocessor such as an Intel Pentium microprocessor or Motorola power PC microprocessor. One of skill in the relevant art will recognize that the terms "machine-readable (storage) medium" or "computer-readable (storage) medium" include any type of device that is accessible to the processor.

The memory is coupled to the processor by, for example, a bus. The memory can include, by way of example but not limitation, random access memory (RAM), such as dynamic RAM (DRAM) and static RAM (SRAM). The memory can be local, remote, or distributed.

The bus also couples the processor to the non-volatile memory and drive unit. The non-volatile memory is often a magnetic floppy or hard disk, a magnetic-optical disk, an optical disk, a read-only memory (ROM), such as a CD-ROM, EPROM, or EEPROM, a magnetic or optical card, or another form of storage for large amounts of data. Some of this data is often written, by a direct memory access process, into memory during execution of software in the computer system 300. The non-volatile storage can be local, remote, or distributed. The non-volatile memory is optional because systems can be created with all applicable data available in memory. A typical computer system will usually include at least a processor, memory, and a device (e.g., a bus) coupling the memory to the processor.

Software is typically stored in the non-volatile memory and/or the drive unit. Indeed, for large programs, it may not even be possible to store the entire program in the memory. Nevertheless, it should be understood that for software to run, if necessary, it is moved to a computer readable location appropriate for processing, and for illustrative purposes, that location is referred to as the memory in this disclosure. Even when software is moved to the memory for execution, the processor will typically make use of hardware registers to store values associated with the software, and local cache that, ideally, serves to accelerate execution. As used herein, a software program is assumed to be stored at any known or convenient location (from non-volatile storage to hardware registers) when the software program is referred to as "implemented in a computer-readable medium." A processor is considered to be "configured to execute a program" when at least one value associated with the program is stored in a register readable by the processor.

The bus also couples the processor to the network interface device. The interface can include one or more of a modem or network interface. It will be appreciated that a modem or network interface can be considered to be part of the computer system 300. The interface can include an analog modem, isdn modem, cable modem, token ring interface, satellite transmission interface (e.g. "direct PC"), or other interfaces for coupling a computer system to other computer systems. The interface can include one or more input and/or output devices. The I/O devices can include, by way of example but not limitation, a keyboard, a mouse or other pointing device, disk drives, printers, a scanner, and other input and/or output devices, including a display device. The display device can include, by way of example but not limitation, a cathode ray tube (CRT), liquid crystal display (LCD), or some other applicable known or convenient display device. For simplicity, it is assumed that controllers of any devices not depicted in the example of **FIG. 3** reside in the interface.

In operation, the computer system 300 can be controlled by operating system software that includes a file management system, such as a disk operating system. One example of operating system software with associated file management system software is the family of operating systems known as Windows® from Microsoft Corporation of Redmond, Washington, and their associated file management systems. Another example of operating system software with its associated file management system software is the Linux operating system and its associated file management system. The file management system is typically stored in the non-volatile memory and/or drive unit and causes the processor to execute the various acts required by the operating system to input and output data and to store data in the memory, including storing files on the non-volatile memory and/or drive unit.

Some portions of the detailed description may be presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or "generating" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general purpose systems may be used with programs in accordance with the teachings herein, or it may prove convenient to construct more specialized apparatus to perform the methods of some embodiments. The required structure for a variety of these systems will appear from the description below. In addition, the techniques are not described with reference to any particular programming language, and various embodiments may thus be implemented using a variety of programming languages.

In alternative embodiments, the machine operates as a standalone device or may be connected (e.g., networked) to other machines. In a networked deployment, the machine may operate in the capacity of a server or a client machine in a client-server network environment, or as a peer machine in a peer-to-peer (or distributed) network environment.

The machine may be a server computer, a client computer, a personal computer (PC), a tablet PC, a laptop computer, a set-top box (STB), a personal digital assistant (PDA), a cellular telephone, an iPhone, a Blackberry, a processor, a telephone, a web appliance, a network router, switch or bridge, or any machine capable of executing a set of instructions (sequential or otherwise) that specify actions to be taken by that machine.

While the machine-readable medium or machine-readable storage medium is shown in an exemplary embodiment to be a single medium, the term "machine-readable medium" and "machine-readable storage medium" should be taken to include a single medium or multiple media (e.g., a centralized or distributed database, and/or associated caches and servers) that store the one or more sets of instructions. The term "machine-readable medium" and "machine-readable storage medium" shall also be taken to include any medium that is capable of storing, encoding or carrying a set of instructions for execution by the machine and that cause the machine to perform any one or more of the methodologies or modules of the presently disclosed technique and innovation.

In general, the routines executed to implement the embodiments of the disclosure, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processing units or processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution.

Further examples of machine-readable storage media, machine-readable media, or computer-readable (storage) media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

In some circumstances, operation of a memory device, such as a change in state from a binary one to a binary zero or vice-versa, for example, may comprise a transformation, such as a physical transformation. With particular types of memory devices, such a physical transformation may comprise a physical transformation of an article to a different state or thing. For example, but without limitation, for some types of memory devices, a change in state may involve an accumulation and storage of charge or a release of stored charge. Likewise, in other memory devices, a change of state may comprise a physical change or transformation in magnetic orientation or a physical change or transformation in molecular structure, such as from crystalline to amorphous or vice versa. The foregoing is not intended to be an exhaustive list of all examples in which a change in state for a binary one to a binary zero or vice-versa in a memory device may comprise a transformation, such as a physical transformation. Rather, the foregoing are intended as illustrative examples.

A storage medium typically may be non-transitory or comprise a non-transitory device. In this context, a non-transitory storage medium may include a device that is tangible, meaning that the device has a concrete physical form, although the device may change its physical state. Thus, for example, non-transitory refers to a device remaining tangible despite this change in state.

**FIG. 4** is a flow chart of an example of a computer-implemented method 400 of operating a computer system to forecast a regional economic activity via regional financial statements, in accordance with various embodiments. The computer system, for example, may be the computer system 100 of **FIG. 1** or the computer system 200 of **FIG. 2.** The computer system can receive (e.g., through a data feed) financial statements from firms within a geographical region. For example, a programmed crawler application (e.g., part of the data extraction engine 203 of **FIG. 2)** can crawl through all U.S. corporate financial statements filed with the Electronic Data Gathering, Analysis, and Retrieval (EDGAR) database of the U.S. Security and Exchange Commission (SEC) to collect the financial statements. The computer-implemented method 400 can then be executed to construct a real-time or semi-real-time index of the U.S. business sector using the accounting information in the financial statements.

SEC's EDGAR filings are available online (for free). U.S. corporations are required to file quarterly and annual financial statements with EDGAR. The crawler application can incorporate financial statement information filed as accurately as the crawling date (e.g., if a publically listed corporation filed its financial statements today, the crawler application can incorporate its financial statement filing in real-time for today).

At step 402, the computer system can select a group of representative firms and the financial statements of the representative firms in the geographical region. The group may be selected based on whether public financial statements are available. For example, the group may be selected from publicly traded firms in a particular region, such as the U.S., China, or the European Union. The selection may be based on a sampling of the available base, such as a sampling of the publicly traded companies in the U.S. The financial statements can include, for example, income statements, balance sheets, statements of cash flows, or any combination thereof.

Then, at step 404, the computer system extracts (e.g., via the statement analysis module 202 of **FIG. 2)** accounting measurements from the financial statements for one or more immediately preceding consecutive (time) periods (including the most recent financial statement). For example, the financial statements may be for at least an immediate preceding time period across a quarter, a month, or a year. The accounting measurements can include various quantities reported in a financial statement. For example, the accounting measurements can include fixed and/or current asset, inventory, accounts receivable, cash, fixed assets, earnings before interest and tax, operating income, operating expense, non-operating income, total sales, cost of goods sold, administrative expenses, general expenses, selling expenses, depreciation expense, or any combination thereof. One or more accounting measurements may be derived from other accounting measurements whenever unavailable.

At step 406, the computer system computes financial assessments, including profitability driver assessments (e.g., depreciation-to-sales ratio (DEP), asset turnover (ATO), operating margin (OM), profit margin (PM), or any combination thereof) and/or profitability assessments (e.g., the RNOA) of the representative firms at time points within the consecutive periods based on the accounting measurements. The financial assessments can also include accounting earning growth of the representative firms. Computing the financial assessments may include computing a financial indicator for each firm that provides an unlevered measure of the firm's operating performance without the effects of financial leverage.

A profitability assessment, such as the RNOA, can be represented as the ratio of operating income after depreciation to net operating assets. Operating income is defined as sales minus cost of goods sold, selling, general, and administrative expense, and depreciation expense. The operating assets are defined as operating assets, which are total assets minus cash and short-term investments, minus operating liabilities, which are total liabilities minus long-term and short-term debt.

In some embodiments, the profitability driver assessments can be computed in accordance with the DuPont Model that decomposes the RNOA into the ATO multiplied by the PM. Potential drivers of ATO may include changes in fixed and/or current asset, inventory, accounts receivable, cash, fixed assets, operating income, or any combination thereof. Potential drivers of PM may include earnings before interest and tax, operating income, operating expense, non-operating income, or any combination thereof. The PM may further be decomposed into OM and DEP. OM is computed as the operating income of a time period divided by the net sales of the time period. DEP is computed as depreciation expenses of a time period divided by sales revenue of the time period.

In some embodiments, the accounting measurements reported in the financial statements, the profitability driver assessments or profitability assessments can be normalized. In some embodiments, the accounting measurements and/or the assessment values can be annualized (e.g. multiply the accounting measurements by four for quarterly financial statements). To seasonally adjust accounting data, the computer system can use year-over-year changes in quarterly profitability ratios. To mitigate the influence of outliers, the computer system can exclude observations falling in the top or bottom threshold percentages (e.g. 1%) of each quarterly cross-section of the levels or changes in RNOA and its drivers. Step 408 can further include other existing macroeconomic forecasting indicators, such as treasury yield and/or survey of SPF consensus.

Stock market returns can contain leading information about overall economic activities. The computer-implemented method 400, hence, includes step 408 of collecting stock market prices within the geographical region. The collected stock market prices can correspond to the selected representative firms or another sampling of firms in the geographical region. Specifically, stock market returns positively predict subsequent real GDP growth. Stock market returns' predictive power varies with the length of the measurement window of the stock market returns. An annual measurement window has been discovered to be especially predictive.

At step 410, the computer system computes a macroeconomic index (e.g., an aggregate index computed by the index computation module 206 of FIG. 2) by aggregating the financial assessments or changes in the financial assessments across the selected group within the geographical region. In some embodiments, the changes can be precomputed in step 406. In some embodiments, the macroeconomic index may include weighted portions of the aggregate raw levels of the profitability driver assessments or the profitability assessments in addition to or instead of the changes to the assessment values. In some embodiments, constructing the macroeconomic index includes aggregating just the changes in the profitability driver assessments. In some embodiments, constructing the macroeconomic index includes aggregating just the changes in the profitability assessments. The computer system can compute the macroeconomic index based on a value weighted cross-sectional average of the profitability assessments or the profitability driver assessments.

Step 410 can include the computer system computing a first macroeconomic index by aggregating changes in the profitability driver assessments, a second macroeconomic index by aggregating changes in the profitability assessments, a third macroeconomic index by aggregating levels/values of the profitability assessments, a fourth macroeconomic index by aggregating stock market returns, a fifth macroeconomic index by aggregating accounting earning growth, or any combination thereof. For example, the first macroeconomic index (e.g., referred to as a "profitability driver index") can be computed in accordance to Eq. 1.

$$g_{q+1} = \alpha + \beta_1 \times \Delta ATO_q + \beta_2 \times \Delta OM_q + \beta_3 \times \Delta DEP_q + \varepsilon_{q+1} \qquad \text{Eq. 1.}$$

Here, Eq. 1. represents an example of a formula to forecast macroeconomic activity of the next time period, which is denoted $g_{q+1}$. $\Delta ATO_q$ is the change in asset turnover through a preceding period (e.g., an immediately preceding period or a broader period that spans the consecutive periods previously mentioned). $\Delta OM_q$ is the change in operating margin of the preceding period. $\Delta DEP_q$ is the change in a depreciation-to-sales ratio of the preceding period. $\Delta DEP_q$, $\Delta OM_q$, and $\Delta ATO_q$ may be computed as aggregate indexes. $\varepsilon_{q+1}$, $\alpha$, $\beta_1$, $\beta_2$, and $\beta_3$ are econometric terms underlying a statistical regression analysis. The regression analysis can be deployed on historical data to determine the proper weights for calculating the profitability driver index. $\varepsilon_{q+1}$ is the regression error term. $\alpha$ is the regression intercept term that captures the mean effect (or intercept) of the dependent variable in a regression analysis. $\beta_1$, $\beta_2$, and $\beta_3$, are weights. In some embodiments, $\beta_1$, the weight on the change to ATO, is substantially near zero. This is because the change in ATO has been discovered to be a poor predictor of the real GDP growth. $\beta_2$, and $\beta_3$, are weights that are greater than zero and greater than $\beta_1$.

It has been discovered that the aggregate changes in profitability and profitability drivers for firms occupying the largest percentage of the total market capitalization of a region closely correlate the aggregate changes in profitability and profitability drivers for all firms within the region. Hence, the selection in step 402 may also be based on the percentage in which a firm occupies the total market capitalization within the region. For example, the selection may include the 100 largest firms in terms of market capitalization in the period between 1981 and 2011.

In some embodiments, the step 410 includes generating the second macroeconomic index, which is a profitability growth index at the aggregate level. It has been discovered herein that there exists a significant positive association between the profitability index of aggregate changes in accounting profitability (e.g. changes in return on net operating assets ($\Delta RNOA$)) and subsequent real and nominal GDP growth.

It has been discovered that the predictive ability of profit margins swamps that of asset turnover, with the predictive ability of $\Delta RNOA$ driven primarily by aggregate changes in profit margins. The profit margin assessments may be decomposed into operating margins, such as the ratio of operating income before depreciation-to-sales, and the ratio of depreciation-to-sales, a proxy for tangible capital intensity, or any combination thereof. The aggregate changes in both the ratio of operating income before depreciation and the ratio of depreciation-to-sales are significantly positively associated with subsequent real GDP growth. Taken together, the computer system can calculate (e.g., via the forecast module 210) a GDP growth projection based on aggregate changes in accounting profitability drivers in step 412. It has been found that the accounting profitability drivers can anticipate 26% of the time-series variation in subsequent real GDP growth.

The predictive content of aggregate accounting profitability drivers is not subsumed by that of the stock market returns, such as the annual stock market returns. That is, the financial statement analysis of firm profitability drivers at the aggregate level is incrementally useful for macro forecasting. Hence, the stock market returns together with the profitability driver index at the aggregate level may be useful in macroeconomics forecasting consistent with rational expectations of asset pricing models.

The use of aggregate accounting profitability data leads to significant improvements in terms of explanatory power with respect to economic growth. For example, the adjusted coefficient of determination, which can indicate how well data points fit the real GDP growth, rises from 20%, when annual stock market returns are included as stand-alone predictors of subsequent real GDP growth, to 30%, when annual stock market returns are included together with aggregate changes in accounting profitability drivers

Professional macro forecasters, while good at forecasting regional economies, also make errors. Accordingly, professional macro forecasters revise their expectations of real economic activities from time to time. Stock market returns have predictive content that minimizes this error. Along the same line, aggregate accounting profitability drivers also has predictive content that minimizes this error.

However, macro forecasters are not fully attuned to aggregate accounting profitability drivers. It has been discovered that lagged accounting profitability data is able to predict errors made by these macro forecasters in predicting real GDP growth. In contrast, live stock market returns are unable to predict the real GDP growth forecast errors. Hence, real GDP growth prediction can be improved in a statistically and economically significant way using one or more indices of aggregate accounting profitability drivers. This discovery is significant and consistent with the fact that stock market returns data are known to have predictive ability for the real economy that are readily available to macro forecasters, while aggregate accounting profitability data are not. In short, stock market returns do not subsume the macro predictive content of aggregate accounting profitability drivers.

In some embodiments, other accounting information (other than profitability or profitability drivers) can be used to calculate a macroeconomic index. For example, a macroeconomic index (e.g., referred to as the "accounting earning growth index") can be used in accordance to Eq. 2.

$$g_{q+k} = \alpha_k + \beta_k \times \Delta X_q + \varepsilon_{q+k} \qquad \text{Eq. 2.}$$

Here, $\Delta X_q$ is aggregate accounting earnings growth for quarter $q$ and $g_{q+k}$ is the GDP growth for subsequent quarter q+k, where $k = \{1, 2, 3, 4\}$. $g_q$ is the GDP growth for quarter q. The weights $\alpha_k$ and $\beta_k$ can be computed via a regression analysis of historical data. The slope coefficient $\beta_k$ on $\Delta X_q$ is the coefficient/weight of interest. Evidence suggests that for any forecast horizon $k$, an estimate of $\beta_k$ is significantly different from zero, suggesting that aggregate accounting earnings growth is informative about GDP growth for that horizon. Evidence further suggests that while macroforecasters may regularly impound the informativeness of contemporaneous GDP growth in forecasting subsequent horizon, they have not impound the informativeness of aggregate accounting earning growth. The disclosed computer-implemented method 400 cures this deficiency by computing an aggregate index that impounds the predictive content of the accounting earning growth in aggregate.

At step 412, the computer system can forecast an economic activity trend (e.g., in the form of GDP growth) of the geographical region. This can be based on the fourth macroeconomic index reflecting the stock market returns during the consecutive periods in the geographical region. This can be further based on the one or more of the other macroeconomic indexes computed in step 410. For example, the real GDP growth calculated based on a stock market return index can be adjusted based on and proportional to a macroeconomic index of changes in the profitability driver assessments or profitability assessments.

It has been discovered that stock market returns are positively related to the macroeconomic index or indexes computed by the computer-implemented method 400 (e.g., the profitability driver index) at an aggregate level. Hence, another application of the macroeconomic indexes is predicting stock valuations. Thus optionally, the computer-implemented method 400 may include a step 414 of predicting stock valuation changes or forecasting a stock valuation change based on one or more of the macroeconomic indexes computed in step 410. In some embodiments, the one or more macroeconomic indexes can be normalized and/or weighted before being used for forecasting stock valuation.

For example, there is an association between stock market returns and the portion of real GDP growth (e.g., at quarter (q+1)) that is predictable based on the macroeconomic indexes. The predictive content of such indexes are not anticipated by stock market investors. Specifically, the following time-series regression model may be used to identify the weights to estimate stock valuation:

$$ret_{t+1 \to t+3} = \alpha + \beta \times g^{ACC}_{q+1} + \varepsilon_{j+1 \to t+3} \qquad \text{Eq. 3}$$

The left-hand-side variable in Equation 3 is the buy-and-hold stock market return measured over, for example, the 3-month period from the end of month t to the end of month t+3. The return measurement window enables capturing information flows leading to the BEA's advance release of real GDP growth for quarter q+1, which occurs by the end of the first month after quarter q+1 ends, i.e., end of month t+3.

The right-hand-side variable in Equation 3 is measured in two stages. In the first stage, the computer system obtain fitted values from the time-series regression of subsequent real GDP growth on aggregate changes in accounting profitability drivers according to Equation 1. In the second stage, the computer system regresses the fitted values from Equation 1 on the annual stock market returns measured over the 12 months leading to the end of month t and obtain the residuals. The residuals from this second-stage regression, denoted $g^{ACC}_{q+1}$, capture the portion of subsequent real GDP growth that is predictable based on the macroeconomic indexes (e.g., the macroeconomic index of aggregate accounting profitability drivers) but that is not anticipated by stock market investors.

It has been discovered that a significantly positive association between stock market returns and the predictable portion of real GDP growth for the CRSP index and the S&P index, respectively. Findings suggest that aggregate accounting profitability drivers flow into stock market returns through subsequent real GDP growth. In additional, according to a month-by-month analysis, it has been found that the link between the predictable portion of subsequent real GDP growth and stock market returns flows evenly over the three months leading to the BEA's advance release of real GDP growth for quarter q+1.

The positive association between stock market returns and the portion of real GDP growth that is predictable based on aggregate accounting profitability data can be explained in at least two ways. First, it may be due to delayed assimilation of aggregate accounting profitability drivers. Second, it may be due to a positive link between investors' expectations about discount rates and investors' expectations about growth. Prior research suggests that there is a common component between revisions in expectations about discount rates and revisions in expectations about growth. Either explanation is plausible. Nevertheless, the evidence suggests that the link between aggregate accounting profitability drivers and subsequent real GDP growth is relevant for stock valuation.

Reference in this specification to "various embodiments" or "some embodiments" means that a particular feature, structure, or characteristic described in connection with the embodiment is included in at least one embodiment of the disclosure. Alternative embodiments (e.g., referenced as "other embodiments") are not mutually exclusive of other embodiments. Moreover, various features are described which may be exhibited by some embodiments and not by others. Similarly, various requirements are described which may be requirements for some embodiments but not other embodiments.

While processes or blocks are presented in a given order in FIG. 4, alternative embodiments may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. In addition, while processes or blocks are at times shown as being performed in series, these processes or blocks may instead be performed in parallel, or may be performed at different times.

Some embodiments include one or more non-transitory tangible computer-readable media having computer-executable instructions for performing a method of forecasting macroeconomic activity by running a program by at least a processor. The instructions comprise: initiating a data link to receive or extract financial statements of a group of representative firms within a geographical region from an external electronic system; extracting accounting measurements from the financial statements for preceding time periods; computing changes in a profitability driver or a profitability indicator from the accounting measurements for the representative firms in the group; computing an aggregate index by aggregating the changes across the group within the geographical region; forecasting a macroeconomic trend proportional to a real or nominal gross domestic product (GDP) growth within the geographical region based on the aggregate index; and generating an investor interface that presents the forecasted macroeconomic trend to facilitate a financial transaction. Computing the changes can include computing a difference between consecutive depreciation-to-sales ratios, wherein each of the consecutive depreciation-to-sales ratios is computed as depreciation expenses of a time period divided by sales revenue of the time period. Computing the changes can include computing a difference between consecutive operating margins, wherein each of the consecutive operating margins is computed as operating income of a time period divided net sales of the time period. The instructions can further comprise forecasting a stock portfolio valuation based on the real or nominal GDP growth or the aggregate index. The instructions can also further comprise executing an electronic transaction over an electronic exchange automatically, in response to forecasting the macroeconomic trend.

Some embodiments include a computer-implemented method of forecasting macroeconomic activity comprising: receiving financial statements of a group of representative firms within a geographical region; extracting accounting measurements from the financial statements for at least a preceding time period (q); computing financial assessments of a first category based on the accounting measurements for each firm in the group; computing a first aggregate index by aggregating changes in the financial assessments across the group within the geographical region; and forecasting a macroeconomic trend within the geographical region based on the first aggregate index. Forecasting the macroeconomic trend can be further based on stock market returns of the representative firms over the preceding or current time period. The computer-implemented method can further comprise forecasting a stock valuation change within the geographical region based on the first aggregate index. Computing the first aggregate index can include computing the first aggregate index based on value weighted cross-sectional averages of the changes. Forecasting the macroeconomic trend can be in accordance with: $g_{q+1} = \alpha + \beta_1 \times INDX_1 + RES$; wherein $g_{q+1}$ denotes a quantity proportional to the macroeconomic trend, $INDX_1$ is the first aggregate index, and $\alpha$ and $\beta_1$ are weights; and wherein RES denotes a residual that is substituted by a constant or a variable function. The computer-implemented method can further comprise computing a second aggregate index by aggregating changes of the financial assessments of a second category; and wherein the residual (RES) is proportional to $\beta_2 \times INDX_2$, $INDX_2$ being the second aggregate index and $\beta_2$ being a weight. The financial statements can include income statements, balance sheets, statements of cash flows, or any combination thereof. The accounting measurements can include total sales, cost of goods sold, administrative expenses, general expenses, selling expenses, depreciation expense, or any combination thereof. Computing the financial assessments can include computing a financial indicator that provides an unlevered measure of firm operating performance without effects of financial leverage. Computing the financial assessments can include computing profitability driver assessments based on return on net operating asset (RNOA) of the preceding or current time period, the RNOA being a ratio of net operating income after depreciation to net operating assets. Computing the financial assessments can include computing asset turnover (ATO), profit margin (PM), or both, of the preceding or current time period. Computing the financial assessments can include computing operating income, which is sales minus cost of goods sold, selling, general, and administrative expenses, and depreciation expense. Computing the financial assessments can include computing net operating asset, which is total assets minus cash and short-term investments, minus operating liabilities; and wherein the operating liabilities are total liabilities minus long-term and short-term debt. The preceding or current time period can span across an immediately preceding quarter, an immediately preceding month, or an immediately preceding year. The macroeconomic trend can include real GDP growth, real GDP level, nominal GDP growth, nominal GDP level, inflation level, recessions and expansions changes, unemployment rates, industrial productivity, housing starts, real estate valuations, or any combination thereof.

Some embodiments can include a computer system comprising a memory storing executable instructions and a processor configured by the executable instructions to: receive financial statements of firms within a geographical region; extract accounting measurements from the financial statements for preceding time periods; compute changes in a profitability driver or a profitability indicator from the accounting measurements; compute an aggregate index by aggregating the changes within the geographical region; and forecast a gross domestic product (GDP) growth within the geographical region based on the aggregate index. The processor can be further configured to select a subset of representative firms from the firms in the geographical region and to compute the aggregate index by aggregating the changes across the subset.

## Claims

1. One or more non-transitory tangible computer-readable media having computer-executable instructions for performing a method of forecasting macroeconomic activity by running a program by at least a processor, the instructions comprising:

    initiating a data link to receive or extract financial statements of a group of representative firms within a geographical region from an external electronic system;
    extracting accounting measurements from the financial statements for preceding time periods;
    computing changes in a profitability driver or a profitability indicator from the accounting measurements for the representative firms in the group;
    computing an aggregate index by aggregating the changes across the group within the geographical region;
    forecasting a macroeconomic trend proportional to a real or nominal gross domestic product (GDP) growth within the geographical region based on the aggregate index; and
    generating an investor interface that presents the forecasted macroeconomic trend to facilitate a financial transaction.

2. The one or more non-transitory tangible computer-readable media of claim 1, wherein computing the changes includes computing a difference between consecutive depreciation-to-sales ratios, wherein each of the consecutive depreciation-to-sales ratios is computed as depreciation expenses of a time period divided by sales revenue of the time period.

3. The one or more non-transitory tangible computer-readable media of claim 1, wherein computing the changes includes computing a difference between consecutive operating margins, wherein each of the consecutive operating margins is computed as operating income of a time period divided net sales of the time period.

4. The one or more non-transitory tangible computer-readable media of claim 1, wherein the instructions further comprises forecasting a stock portfolio valuation based on the real or nominal GDP growth or the aggregate index.

5. The one or more non-transitory tangible computer-readable media of claim 1, wherein the instructions further comprises executing an electronic transaction over an electronic exchange automatically, in response to forecasting the macroeconomic trend.

**6.** A computer-implemented method of forecasting macroeconomic activity comprising:

receiving financial statements of a group of representative firms within a geographical region;
extracting accounting measurements from the financial statements for at least a preceding time period (q);
computing financial assessments of a first category based on the accounting measurements for each firm in the group;
computing a first aggregate index by aggregating changes in the financial assessments across the group within the geographical region; and
forecasting a macroeconomic trend within the geographical region based on the first aggregate index.

**7.** The computer-implemented method of claim 6, wherein forecasting the macroeconomic trend is further based on stock market returns of the representative firms over the preceding or current time period.

**8.** The computer-implemented method of claim 6, further comprising forecasting a stock valuation change within the geographical region based on the first aggregate index.

**9.** The computer-implemented method of claim 6, wherein computing the first aggregate index includes computing the first aggregate index based on value weighted cross-sectional averages of the changes.

**10.** The computer-implemented method of claim 6, wherein forecasting the macroeconomic trend is in accordance with $g_{q+1} = \alpha + \beta_1 \times INDX_1 + RES$; wherein $g_{q+1}$ denotes a quantity proportional to the macroeconomic trend, $INDX_1$ is the first aggregate index, and $\alpha$ and $\beta_1$ are weights; and wherein RES denotes a residual that is substituted by a constant or a variable function.

**11.** The computer-implemented method of claim 10, further comprising computing a second aggregate index by aggregating changes of the financial assessments of a second category; and wherein the residual (RES) is proportional to $\beta_2 \times TNDX_2$, $INDX_2$ being the second aggregate index and $\beta_2$ being a weight.

**12.** The computer-implemented method of claim 11, wherein the financial statements include income statements, balance sheets, statements of cash flows, or any combination thereof.

**13.** The computer-implemented method of claim 6, wherein the accounting measurements include total sales, cost of goods sold, administrative expenses, general expenses, selling expenses, depreciation expense, or any combination thereof.

**14.** The computer-implemented method of claim 6, wherein computing the financial assessments includes computing a financial indicator that provides an unlevered measure of firm operating performance without effects of financial leverage.

**15.** A computer system comprising:

a memory storing executable instructions; and
a processor configured by the executable instructions to:

receive financial statements of firms within a geographical region;
extract accounting measurements from the financial statements for preceding time periods;
compute changes in a profitability driver or a profitability indicator from the accounting measurements;
compute an aggregate index by aggregating the changes within the geographical region; and
forecast a gross domestic product (GDP) growth within the geographical region based on the aggregate index.

STOCK
MARKET RETURNS
102

ACCOUNTING
STATEMENT
104

COMPUTER SYSTEM
100

MACROECONOMIC
TRENDS

FIG. 1

COMPUTER SYSTEM
200

FORECAST INTERFACE
214

MACHINE TRADER ENGINE
216

FORECAST
210

INDEX COMPUTATION
206

MACRO-
ECONOMIC
INDEX
208

STATEMENT ANALYSIS
202

DATA EXTRACTION
ENGINE
203

STOCK
MARKET RETURNS
212

ACCOUNTING
STATEMENT
204

*FIG. 2*

300

| PROCESSOR |
| INSTRUCTIONS |

| MAIN MEMORY |
| INSTRUCTIONS |

| NON-VOLATILE MEMORY |

| NETWORK INTERFACE DEVICE |

NETWORK

BUS

| VIDEO DISPLAY |

| ALPHA-NUMERIC INPUT DEVICE |

| CURSOR CONTROL DEVICE |

| DRIVE UNIT |
| MACHINE-READABLE (STORAGE) MEDIUM |
| INSTRUCTIONS |

| SIGNAL GENERATION DEVICE |

*FIG. 3*

16

400 ────►

Selecting a group of
representative firms
with financial
statements in a region
402

Extracting accounting
measurements from the
financial statements
404

Computing financial
assessments of the
representative firms
406

Collecting stock market
prices in the region
408

Predicting stock
valuation changes based
on the macroeconomic
index
414

Computing a macroeconomic index
by aggregating the financial
assessments or changes thereof
410

Forecasting an
economic activity trend
of the region
412

FIG. 4

Europäisches
Patentamt

European
Patent Office

Office européen
des brevets

# EUROPEAN SEARCH REPORT

**Application Number**

EP 14 17 5123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593). The claimed-subject matter, with due regard to the description and drawings, relates to processes comprised in the list of subject-matter and activities excluded from patentability under Art.52 (2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q30/02 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 22 October 2014 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches Patentamt

European Patent Office

Office européen des brevets

## EUROPEAN SEARCH REPORT

Application Number

EP 14 17 5123

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |

TECHNICAL FIELDS SEARCHED (IPC)

The present search report has been drawn up for all claims

| Place of search | Date of completion of the search | Examiner |
|---|---|---|
| The Hague | 22 October 2014 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61841893 A
- US 31831514 A